Europäisches Patentamt

European Patent Office

Office européen des brevets

(19)

(11) Numéro de publication: **0 450 248 A1**

# DEMANDE DE BREVET EUROPEEN

(21) Numéro de dépôt: **90440030.6**

(22) Date de dépôt: **04.04.90**

(51) Int. Cl.⁵: **F02M 31/06, G05D 23/13**

(43) Date de publication de la demande:
**09.10.91 Bulletin 91/41**

(84) Etats contractants désignés:
**AT BE CH DE DK ES FR GB GR IT LI LU NL SE**

(71) Demandeur: **MECAPLAST S.A.M.**
**4-6 Avenue du Prince Héréditaire Albert**
**MC-98014 Monaco Cédex(MC)**

(72) Inventeur: **Rohr, Patrick**

**Les pivoines No. 10, Hameau du Soleil**
**F-06270 Villeneuve-loubet(FR)**
Inventeur: **Barrabino, Eric**
**63 Boulevard du jardin exotique**
**F-98000 Monaco(FR)**

(74) Mandataire: **Bossard, Jacques-René**
**Cabinet MEYER & COURTASSOL Bureau**
**EUROPE 20 Place des Halles**
**F-67000 Strasbourg(FR)**

(54) **Système de régulation thermique.**

(57) Système de servo-régulation de la température de l'air d'admission dans les moteurs à combustion interne, du type comportant d'une part un thermostat à cire eutectique (7) sensible à la température de l'air chaud capté sur la tubulure d'échappement et d'autre part un servomoteur pneumatique (12) sensible à la dépression créée par le moteur, les effets dudit thermostat (7) et dudit moteur (12) etant cumulés pour provoquer le basculement d'un volet (4) d'admission de l'air chaud, caractérisé en ce que ledit thermostat (7) et ledit servomoteur (12) agissent transversalement l'un sur l'autre.

*Fig 1*

La présente invention concerne un nouveau système de servorégulation de la température de l'air d'admission dans les moteurs à combustion interne.

On connait déjà des systèmes de ce genre, visant à régler les débits respectifs d'admission d'air froid et d'air chaud, en fonction des conditions de fonctionnement du moteur, ces systèmes comportant d'une part un thermostat à cire eutectique sensible à la température de l'air chaud capté sur la tubulure d'échappement et d'autre part un servomoteur pneumatique sensible à la dépression résultant du fonctionnement du moteur.

Un tel système est décrit par exemple dans le brevet français 2.367.924, dans lequel la particularité est que ledit thermostat et ledit servomoteur sont montés en série l'un derrière l'autre, de telle manière que leurs actions sont constamment cumulatives par addition. L'inconvénient d'un tel système purement additionnel est d'une part son encombrement, puisque les deux moyens de contrôle sont nécessairement alignés l'un derrière l'autre, et d'autre part un certain manque de précision et de sensibilité, les variations de longueur du poussoir du thermostat demeurant toujours relativement faibles.

La présente invention permet d'éliminer ces deux inconvénients, grâce à un système dans lequel, au lieu d'être en série, les deux éléments déterminant l'angle de pivotement d'un volet d'admission de l'air chaud agissent transversalement l'un sur l'autre, de manière que l'ensemble est peu encombrant et que les déplacements, même faibles de l'un, sont amplifiés par l'autre selon une composition cumulative, mais non additionnelle.

Selon un premier mode de réalisation de l'invention, l'action du servomoteur pneumatique consistant à exercer une poussée sur un bras de levier pivotant autour d'un axe, solidairement au volet d'admission de l'air chaud, selon l'invention, la tige du thermostat à cire déplace le point d'action de l'élément actionné par ledit servomoteur, de manière à modifier la longueur de ce bras de levier et par suite à modifier l'angle de pivotement résultat de ladite poussée, et le degré d'ouverture du volet.

Selon un second mode de réalisation, c'est, à l'inverse, la longueur de l'élément actionné par le servomoteur pneumatique qui est modifiée, sous l'action transversale de la tige dudit thermostat, avec un résultat semblable.

On va décrire l'invention en se référant au dessin annexé qui décrit les deux modes de réalisation. Sur ce dessin :

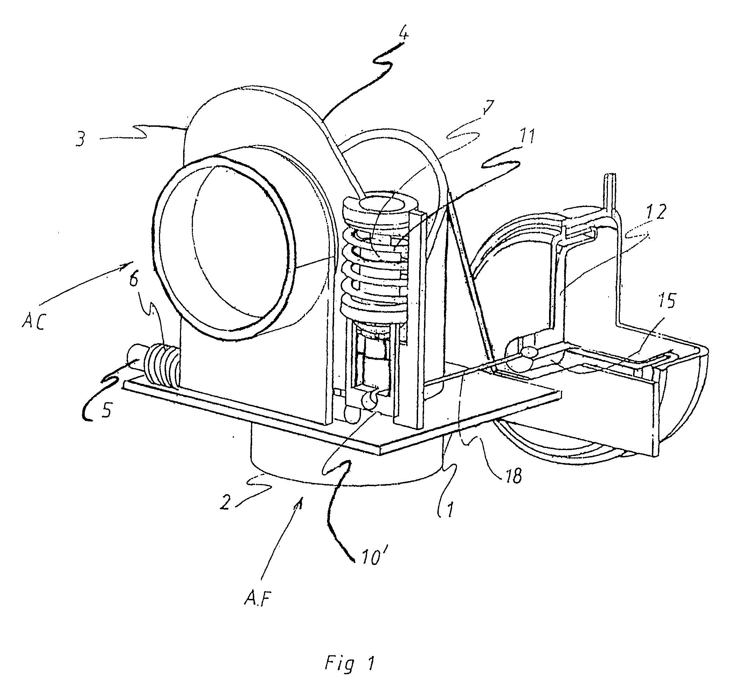

- La figure 1 représente en perspective un premier mode de réalisation du système selon l'invention.

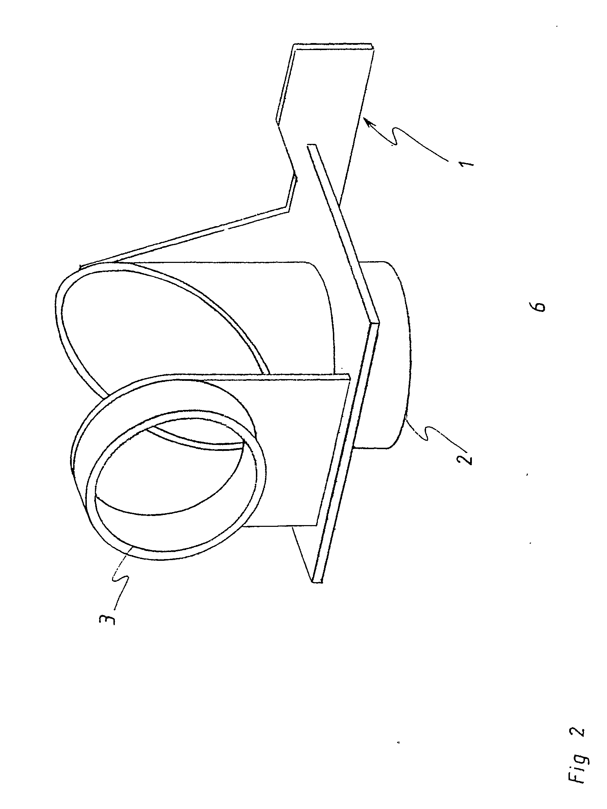

- La figure 2 représente la platine sur laquelle est montée ce système,

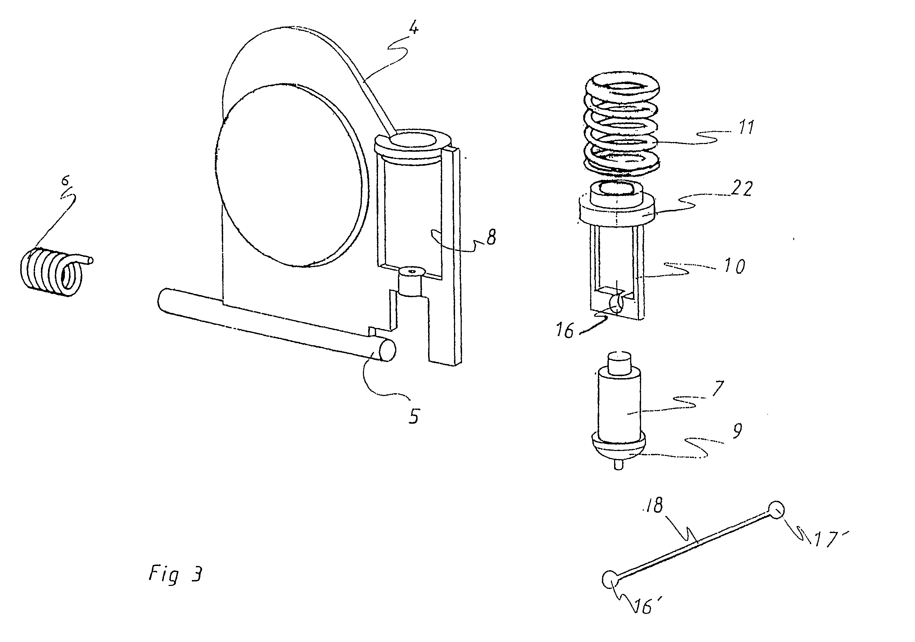

- La figure 3 représente, en vue éclatée, le volet de contrôle de l'arrivée d'air chaud et ses éléments de commande sensibles à la température.

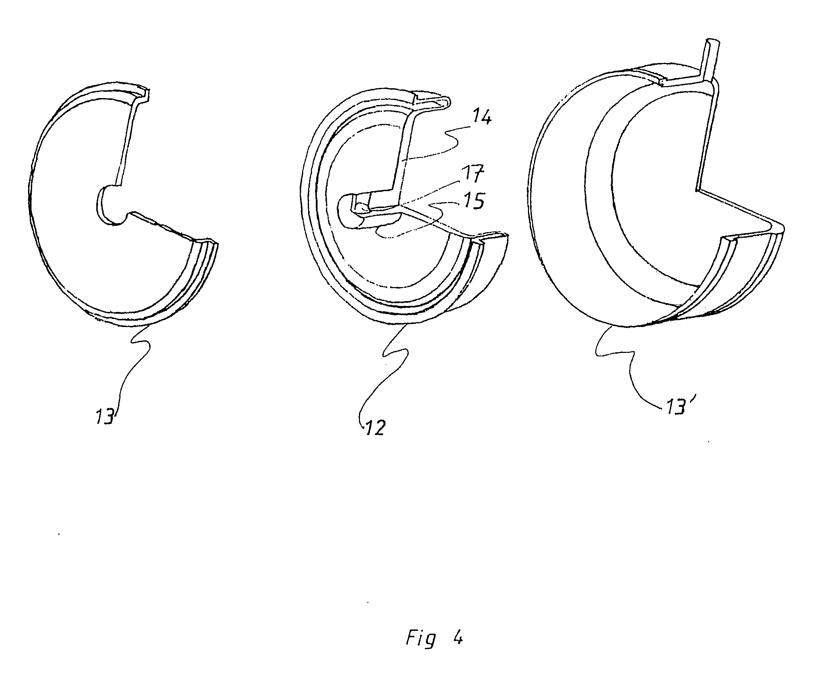

- La figure 4 représente, en vue éclatée, le "poumon" transmettant au volet les variations de la dépression créée par le moteur,

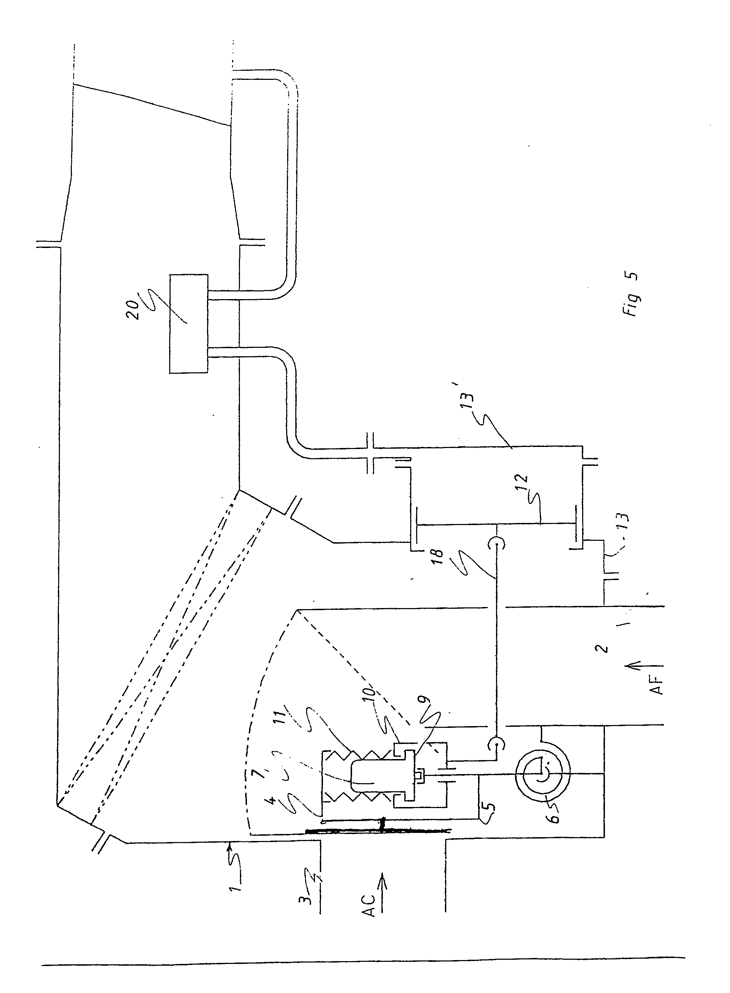

- La figure 5 est un schéma explicatif du fonctionnement du système,
- et la figure 6 est une vue semblable à la figure 1 d'un second mode de réalisation du système selon l'invention.

Sur ce dessin, les mêmes références numériques désignent les mêmes éléments ou des éléments fonctionnellement équivalents :

- Le système de régulation thermique selon l'invention est porté par une platine 1 montée en amont du carburateur réglant l'admission dans le moteur du mélange air-carburant, à savoir dans la tubulure conduisant vers le carburateur un mélange d'air froid et d'air chaud à une température dépendant des conditions de fonctionnement du moteur.

Sur cette platine débouchent une tubulure 2 d'entrée d'air froid pris sur l'air ambiant et une tubulure 3 d'entrée d'air chaud capté sur la tubulure d'échappement. L'entrée d'air chaud 3 est obturée par un volet basculant 4, monté pivotant sur un axe 5 à l'encontre d'un ressort 6.

L'angle de pivotement du volet 4 sur l'axe 5 et par suite le degré d'ouverture dudit volet et donc la quantité d'air chaud admis par la tubulure 3, sont fonction de deux variables, à savoir :

- la température dudit air chaud
- la dépression du moteur.

La température de l'air chaud est captée par un thermostat à cire eutectique 7 monté dans une fenêtre latérale 8 du volet 4, et dont l'épaulement inférieur 9 exerce, lors de sa dilatation, une poussée sur un équipage 10, coulissant verticalement dans la fenêtre 8, à l'encontre d'un ressort de rappel 11 prenant appui sur le bord supérieure de ladite fenêtre et sur un épaulement circulaire 22 situé à la partie supérieure de l'équipage 10.

La dépression du moteur est captée par un volume déformable ou "poumon" 12, logé dans un boîtier en deux portions 13-13', solidaire de l'arrière de la platine 1. La face avant 14 de ce poumon 12 se prolonge par une douille 15, orientée parallèlement à la tubulure 3, et donc transversalement au volet 4 et à la fenêtre 8, quelle que soit leur inclinaison sur l'axe 5.

Dans le bord horizontal inférieur 10' de l'équipage coulissant 10 est pratiqué un logement sphérique 16, et dans la douille 15 est également pratiqué un logement sphérique 17, les logements 16 et 17 étant destinés à recevoir les extrémités 16' et 17' d'une tige rigide 18 tout en permettant à cette tige de suivre à la fois les déplacements horizontaux de la douille 15 sous l'effet des variations de volume du poumon 12, et les déplacements verticaux de l'équipage 10 sous l'effet des variations de longueur du thermostat 7.

Si la température de l'air chaud est constante, le thermostat 10 ne change pas de longueur; dans ces conditions si la dépression du moteur change, les variations de volume du poumon se traduiront par un déplacement horizontal de la tige 18, qui provoqueront à leur tour un basculement du volet 4 autour de son axe 5, suivant un rayon de pivotement constant, égal à la distance entre l'axe 5 et le point 16.

Si la température de l'air chaud change, alors le point d'application 16 des déplacements de la tige 18 se déplace verticalement, et selon les différences qui en résulteront dans la distance entre le point 16 et l'axe 5, ledit rayon de pivotement et par suite l'amplitude du basculement du volet 4 en seront modifiés.

Dans la pratique, quand le moteur est à l'arrêt, le volet 4 obture l'arrivée d'air chaud 3, et est maintenu dans cette position par le ressort de rappel 6.

A la mise en route du moteur, la dépression créée provoque la déformation du poumon 12, le déplacement horizontal vers l'arrière résultant de la tige 18 exerçant une traction en 16 sur l'équipage 10, et par suite sur le volet 4 qui bascule sur son axe 5, ce qui autorise l'admission d'air chaud par la tubulure 3, à un degré déterminé par l'emplacement du point 16, c'est-à-dire dépendant de la température de l'air chaud admis.

A pleine charge, le moteur ne crée plus de dépression et le volet revient en position initiale en obstruant l'admission d'air chaud.

Selon l'invention également ce système est couplé à un élément 20 placé dans l'air mélangé (froid et chaud) en amont du carburateur, constitué par une vanne binaire dont le déclenchement à une température choisie résulte de la dilatation d'une autre cartouche à cire eutectique.

Lorsque l'air mélangé admis par le système a atteint la température optimale choisie, l'élément 20 laisse échapper le courant de dépression et neutralise la commande d'ouverture d'air chaud. Le moteur, quelle que soit sa charge, ne reçoit plus que de l'air frais admis par 2.

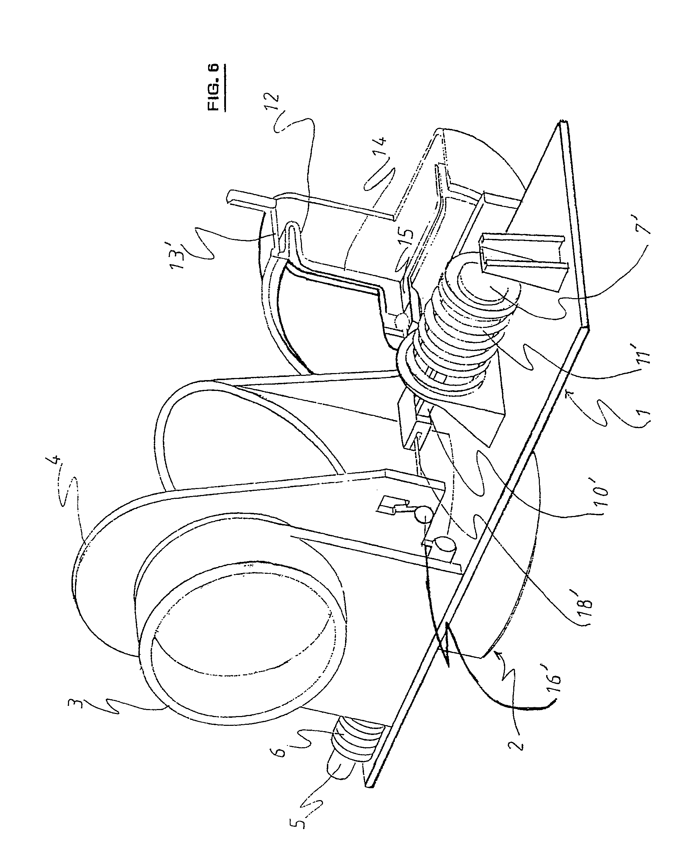

Dans le second mode de réalisation illustré par la figure 6, la tige rigide 18 est remplacée par un câble souple 18', et le thermostat à cire 7' au lieu de modifier le point d'action de l'extrémité avant 16' de la tige 18 en modifiant ainsi le rayon de basculement du volet 4, déforme ledit câble, en en modifiant donc la longueur active, de sorte que, pour une même dépression du moteur, traduite par une certaine modification du volume du poumon 12, l'amplitude du basculement du volet 4 se trouve changée en fonction de la température captée par le thermostat 7'.

## Revendications

1. Système de servo-régulation de la température de l'air d'admission dans les moteurs à combustion interne, du type comportant d'une part un thermostat à cire eutectique sensible à la température de l'air chaud capté sur la tubulure d'échappement et d'autre part un servomoteur pneumatique sensible à la dépression créée par le moteur, les effets dudit thermostat et dudit moteur étant cumulés pour provoquer le basculement d'un volet d'admission de l'air chaud,
   caractérisé en ce que
   ledit thermostat et ledit servomoteur agissent transversalement l'un sur l'autre.

2. Système selon la revendication 1, caractérisé en ce que l'élément transmettant au volet les déformations du servomoteur pneumatique est une tige rigide transversale au plan du volet et le thermostat à cire est monté dans une fenêtre sensiblement parallèle au plan dudit volet, les changements de longueur dudit thermostat étant transmis à un équipage coulissant dans ladite fenêtre et sur lequel agit une extrémité de ladite tige.

3. Système selon la revendication 2, caractérisé en ce que ladite tige est solidarisée à chaque extrémité avec ledit équipage mobile et avec une douille solidaire de la face avant du servomoteur pneumatique, de manière à constituer une chaîne cinématique à cardans.

4. Système selon la revendication 1, caractérisé en ce que l'élément transmettant au volet les déformations du servomoteur pneumatique est un câble souple, transversal au plan dudit volet, et le thermostat à cire est monté sur la platine portant le système, transversalement audit câble, de telle manière que les variations de longueur dudit thermostat déforment ledit câble en en modifiant la longueur.

5. Système selon l'une quelconque des revendications 1 à 4, caractérisé en ce qu'il est au surplus couplé à une vanne binaire placée dans l'air mélangé en amont du carburateur, et dont le déclenchement à une température donnée résulte de la dilatation d'une cartouche à cire eutectique, ce déclenchement déterminant la neutralisation de la commande d'ouverture de l'air chaud, quelle que soit la charge du moteur.

Fig 1

Fig 2

Fig 3

Fig 4

14

17
15

13

12

13'

8

Fig 5

FIG. 6

# RAPPORT DE RECHERCHE EUROPEENNE

**Office européen des brevets**

Numéro de la demande

**EP 90 44 0030**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,Y | FR-A-2 551 800   (FILTERWERK MANN & HUMMEL GMBH) <br> * page 6, ligne 23 - page 8, ligne 4; figure 1 * * page 9, lignes 2 - 17 @ page 12, ligne 15 - colonne 13, ligne 19 * <br> — — — | 1,5 | F 02 M 31/06 <br> G 05 D 23/13 |
| Y | GB-A-2 001 414   (NIPPON DENSO CO) <br> * page 2, lignes 40 - 43; figures 1, 3, 6 * * page 2, lignes 51 - 85 * * page 4, lignes 9 - 16 * <br> — — — | 5 | |
| A | GB-A-2 118 243   (FORD) <br> * page 1, lignes 71 - 122; figure 1 * <br> — — — | 1,5 | |
| A | FR-A-2 423 647   (FILTERWERK MANN & HUMMEL GMBH) <br> * page 6, lignes 25 - 41; figures 1, 2 * * page 8, lignes 1 - 12 * <br> — — — | 1 | |
| A | FR-A-2 550 581   (LAUTRETTE ET CIE) <br> * page 3, ligne 8 - page 4, ligne 26; figure 2 * * page 4, ligne 34 - page 5, ligne 18 * <br> — — — — — | 1 | |

|  | DOMAINES TECHNIQUES RECHERCHES (Int. Cl.5) |
|---|---|
|  | F 02 M <br> G 05 D <br> F 16 K |

Le présent rapport de recherche a été établi pour toutes les revendications

| Lieu de la recherche | Date d'achèvement de la recherche | Examinateur |
|---|---|---|
| La Haye | 06 novembre 90 | JORIS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

\& : membre de la même famille, document correspondant